# EUROPÄISCHE PATENTSCHRIFT

(11) **EP 4 049 990 B1**
(45) Veröffentlichungstag und Bekanntmachung des Hinweises auf die Patenterteilung: **15.11.2023**
(21) Anmeldenummer: 22154404.2
(22) Anmeldetag: 01.02.2022
(51) Int. Cl.: C04B 40/06, C08L 63/00

(54) **IDENTITÄTSGESICHERTE KUNSTHARZMISCHUNGEN FÜR DIE BEFESTIGUNGSTECHNIK, IHRE HERSTELLUNG UND VERWENDUNG**
IDENTITY-PROTECTED SYNTHETIC RESIN MIXTURES FOR FIXING TECHNOLOGY, THEIR PRODUCTION AND USE
MÉLANGES DE RÉSINES À IDENTITÉ SÉCURISÉE POUR LA TECHNIQUE DE FIXATION, LEUR FABRICATION ET LEUR UTILISATION

(30) Priorität: 24.02.2021 DE 102021104434; 15.11.2021 DE 102021129647
(43) Veröffentlichungstag der Anmeldung: 31.08.2022
(73) Patentinhaber: fischerwerke GmbH & Co. KG, 72178 Waldachtal (DE)
(72) Erfinder: Herbstritt, Yvonne, 79183 Waldkirch (DE); Kasper, Patrick, 79350 Sexau (DE); Suchy, Ulrich, 72250 Freudenstadt (DE); Vogel, Martin, 79286 Glottertal (DE); Weinelt, Christian, 79331 Teningen (DE)
(74) Vertreter: Suchy, Ulrich Johannes

(56) Entgegenhaltungen:
- DE-A1-102014 103 923
- DE-A1-102014 109 355

## Beschreibung

### Gegenstand der Erfindung

Die Erfindung betrifft identitätskontrollierbare radikalisch härtbare Kunstharzmischungen, vor allem für die Befestigungstechnik (wobei hierunter nachfolgend insbesondere Befestigung im Baubereich zu verstehen ist), zwei- oder mehrkomponentige Kunstharzsysteme, vor allem für die Befestigungstechnik (dann sind die Kunstharzsysteme nachfolgend auch als Kunstharzbefestigungssysteme zu bezeichnen), welche die genannten Kunstharzmischungen beinhalten, die Verwendung bestimmter Inhaltsstoffe der besagten Kunstharzmischungen zur Kontrolle von deren Identität, die Verwendung der Kunstharzmischungen oder Kunstharzsysteme zur Befestigung von Verankerungselementen in Vertiefungen, wie insbesondere Löchern oder Spalten, in Bausubstraten, oder als Verklebungsmittel für andere Zwecke, die Herstellung besagter Kunstharzmischungen oder Kunstharzsysteme, und/oder weitere nachfolgend genannte Erfindungsgegenstände.

### Hintergrund der Erfindung

An Klebstoffe, insbesondere im Bereich der Befestigungstechnik im Baubereich, sind besonders hohe Anforderungen hinsichtlich Qualität und Leistungsfähigkeit zu erheben, um sicherzustellen, dass damit bewirkte Verklebungen die Erfordernisse hinsichtlich Festigkeit, Dauerhaftigkeit und Beständigkeit bei verschiedenen Bedingungen, z.B. hinsichtlich Temperatur, mechanischer Belastungen durch Wind und Zug- und Scherkräfte und Feuchtigkeit, erfüllen. Kunstharzzusammensetzungen auf Basis radikalisch polymerisierbarer (härtbarer) Verbindungen, wie ungesättigten Polyesterharzen, Urethanmethacrylaten und Vinylesterharzen, sind als Klebe- und Haftmittel bekannt. Häufig sind dies Zweikomponentensysteme, in denen die Kunstharzmischung und das Härtungsmittel in jeweils getrennten Komponenten enthalten sind.

DE102014103923A1 offenbart radikalisch härtbare Kunstharzmischungen enthaltend einen Reaktivverdünner.

Eine Fülle von Anbietern tummeln sich auf dem Markt (siehe z.B. https://www.wlw.de/de/firmen/klebstoffe?satsp=1&qclid=EAlalQobChMlrKvJ25e 6AIVVuh3C hOdKQhAEAAYASAAEglgw D BwE&gclsrc=aw.ds), und insbesondere Anbieter hochwertiger Systeme können rasch mit Imitaten konfrontiert sein, die den Anschein erwecken, von einem bestimmten renommierten Anbieter zu stammen, in Wahrheit jedoch von anderen Anbietern stammen und oft die Qualitätsanforderungen der imitierten Anbieter nicht erfüllen.

Je prominenter eine Marke ist, desto größer wird die Gefahr, dass Plagiate auf den Markt kommen. Das gilt auch für Klebstoffe. Fälscher mischen ihre Produkte meist nach eigenen Rezepturen zusammen. Produktimitate sind oft so perfekt getarnt, dass nicht einmal die Experten der Original-Hersteller in der Lage sind, sie auf den ersten Blick von den eigenen Produkten zu unterscheiden. Eine besonders dreiste Methode nutzt verwendete leere Verpackungen von Originalherstellern und füllt sie erneut mit den eigenen Komponenten.

Besonders groß ist der Schaden, wenn der Anwender die mangelhafte Qualität dem Original-Produkt zuschreibt. Der dann resultierende Imageschaden ist dann bestenfalls mit großem Aufwand wieder gut zu machen.

Auch bei ein und demselben Anbieter kann es gute Gründe geben, die eigenen Produkte hinsichtlich Qualität und Herkunft zu prüfen, beispielsweise zur Kontrolle von Lieferketten, zur Identifikation unterschiedlicher Chargen eines Produktes, zur Prüfung des Herstellungsdatums und -ortes und/oder zur Überprüfung der von Zwischenhändlern auf den Markt gebrachten Zusammensetzungen.

Auch gibt es für Reaktivverdünner in der Regel eine Kennzeichnungspflicht ab bestimmten Konzentrationen.

Vor diesem Hintergrund besteht die Aufgabe der vorliegenden Erfindung darin, einfach und gut identifizierbare radikalisch härtbare Kunstharzmischungen insbesondere für die Befestigungstechnik (vor allem für die Anwendung bei Verankerungselementen im Baubereich) bereitzustellen, die es ermöglichen, die Identität von auf dem Markt angebotenen Produkten zu überprüfen.

Die Aufgabe wird in überraschender Weise durch radikalische härtbare Kunstharzmischungen und diese beinhaltende Kunstharzsysteme gelöst, welche neben einem radikalisch härtbaren Reaktivharz eine Mehrzahl von (analytisch hinsichtlich Identität und/oder Mengenanteil unterscheidbaren) Reaktivverdünnern beinhalten. Erfreulicherweise ist es dabei möglich, die Art und den Anteil der Reaktivverdünner in breiten Grenzen zu variieren, ohne dass die Leistungsfähigkeit damit hergestellter Kunstharz(befestigungs)-systeme in relevanter Weise beeinträchtigt wird. Mittels einfacher analytischer Methoden, wie GC-MS, können die Art der Reaktivverdünner und ihr Anteil in einfacher Weise nachgewiesen und bestimmt werden und so zur Kontrolle von herstellereigenen oder durch Produktpiraten auf den Markt gebrachter Kunstharzsysteme verwendet werden. Da die Reaktivverdünner selbst an der radikalischen Polymerisation teilnehmen, können sie zugesetzt werden, ohne dass nicht-reaktive und somit potentiell die Systemqualität beeinträchtigende Marker zugesetzt werden müssen.

Vorteilhaft ist dabei auch, dass die auf diese Weise mögliche Identitätskodierung dem Produkt äußerlich nicht anzusehen ist und ohne großen Kosten- und Herstellungsaufwand erfolgen kann.

Bei Mischungen mehrerer Reaktivverdünner kann man die Eigenschaften des resultierenden Polymeren beeinflussen, indem man Parameter wie die Funktionalität und/oder die Steifigkeit/Beweglichkeit der Reaktivverdünnermoleküle variiert, so dass geeignete Härten (z.B. charakterisierbar durch die Glasübergangstemperatur) und/oder Elastizitäten im Polymerisationsprodukt eingestellt werden können.Werden Anteile von 1 Gew.-% oder weniger je Reaktivverdünner in den Kunstharzen (Komponente (insbesondere eine Komponente A) ohne Härter) gewählt, ist ein positiver Nebeneffekt der erfindungsgemäßen Kunstharze und Kunstharzsysteme, dass sie kennzeichnungsfrei sein können, was die Anwendung von Reaktivverdünnermischungen ungemein erleichtern kann. Überraschenderweise ergibt eine Mischung unterschiedlicher Reaktivverdünner auch sehr gute Auszugswerte.

In einer ersten Ausführungsform (Variante) der Erfindung betrifft diese radikalisch härtbare Kunstharzmischungen, vor allem zur Anwendung in der Befestigungstechnik (wobei hierunter nachfolgend insbesondere Befestigung im Baubereich zu verstehen ist), dadurch gekennzeichnet, dass sie neben einem (radikalisch härtbaren) Reaktivharz eine Mehrzahl von radikalisch härtbaren Reaktivverdünnern beinhalten.

In einer zweiten Ausführungsform der Erfindung betrifft diese ein zwei- oder mehrkomponentiges Kunstharzsystem (Zwei- oder Mehrkomponenten-Kunstharzsystem) insbesondere zur Anwendung in der Befestigungstechnik, vor allem im Baubereich, insbesondere für die Befestigung von Verankerungselementen in Vertiefungen in Bausubstraten, welches eine Komponente mit einem Härter (Härterkomponente) und eine Komponente, die ein Reaktivharz und eine Mehrzahl von Reaktivverdünnern als Kunstharzmischung beinhaltet, umfasst, wobei die Reaktivverdünner, anstelle in der Komponente mit der Kunstharzmischung vorzuliegen, ferner auch alle oder zum Teil in ein oder mehreren weiteren Komponenten des Kunstharzsystems außer der Komponente mit dem Härter enthalten sein können.

In einer dritten Ausführungsform der Erfindung betrifft diese die Verwendung einer Mehrzahl von Reaktivverdünnern zur Kontrolle der Identität von einer Kunstharzmischung oder einem Kunstharzsystem, insbesondere in bzw. von einem Zwei- oder Mehrkomponenten-Kunstharzsystem, jeweils insbesondere für die Befestigungstechnik oder ein Verfahren zur Kontrolle der Identität einer Kunstharzmischung oder eines Kunstharzsystems, beinhaltend jeweils die qualitative oder die qualitative und quantitative analytische Bestimmung von Art oder von Art und Anteil von einem oder vorzugsweise mehreren oder insbesondere allen der Reaktivverdünner in der Kunstharzmischung oder in einer Reaktivharz beinhaltenden und/oder anderen Komponente in dem Kunstharzsystem. Auch ein diese Verwendung umfassendes Verfahren zur Kontrolle der Identität von Kunstharzmischungen oder Kunstharzsystemen bildet einen Gegenstand der Erfindung.

In einer weiteren Ausführungsform betrifft die Erfindung die Verwendung einer vor- und nachstehend definierten Kunstharzmischung oder eines vor- oder nachstehend definierten Kunstharzsystems zur Befestigung von Verankerungselementen in Vertiefungen, wie insbesondere Löchern oder Spalten, in Bausubstraten, oder als Verklebungsmittel für andere Zwecke, oder ein Verfahren zur Befestigung von Verankerungselementen in Vertiefungen, wie insbesondere Löchern oder Spalten, in Bausubstraten, oder ferner zur Verklebung für andere Zwecke, wobei vorzugsweise das Verankerungsmittel und das Kunstharzsystem in die Vertiefung eingebracht werden oder zu verklebende Teile mit dem Kunstharzsystem auf einer oder beiden der zu verklebenden Flächen in Kontakt gebracht und so miteinander verklebt werden.

Die Erfindung betrifft auch die Herstellung einer vor- und nachstehend definierten Kunstharzmischung oder eines vor- und nachstehend definierten Kunstharzsystems, wobei eine Mehrzahl von Reaktivverdünnern den übrigen Bestandteilen der Kunstharzmischung oder mindestens einer Komponente eines Zwei- oder Mehrkomponenten-Kunstharzsystems, außer der Härterkomponente, zugesetzt werden.

Eine weitere Ausführungsform der Erfindung betrifft einen Satz (beispielsweise in Form eines Kits) von Kunstharzmischungen oder Kunstharzsystemen wie vor- und nachstehend definiert, umfassend eine Mehrzahl von Kunstharzmischungen, die sich jeweils in Art und/oder Anteil einer Mehrzahl von in den Kunstharzmischungen oder den Kunstharzsystemen beinhalteten Reaktivverdünnern unterscheiden. Ein derartiger Satz ermöglicht einen besonders einfachen Vergleich mit zu untersuchenden Proben, da insbesondere nach einem Satz, der eine einer Probe entsprechende Art und Menge von Reaktivverdünnern beinhaltet, durch einfachen Vergleich gesucht werden kann und so einfach Rückschlüsse auf die Zusammensetzung der Probe gezogen werden können. Dies hat den Vorteil, dass man beispielsweise bei unterschiedlichen Produktionsbetrieben hinsichtlich der verwendeten Reaktivverdünner unterschiedliche Zusammensetzungen verwenden und so beispielsweise Rückschlüsse auf den Herstellungsbetrieb ziehen kann.

Eine weitere Ausführungsform der Erfindung betrifft einen Satz gemäß dem vorstehenden Absatz, dadurch gekennzeichnet, dass die Kunstharzmischungen jeweils N (mit N>2, vorzugsweise N>3, insbesondere N>4, vorzugsweise mit N maximal 20 oder insbesondere 10) unterschiedliche Reaktivverdünner aufweisen, ausgewählt aus einer Grundgesamtheit von N+M (mit M>1) unterschiedlichen Reaktivverdünnern, wobei jeder der N+M Reaktivverdünner in mindestens einer der Kunstharzmischungen vorkommt.

Noch eine weitere Ausführungsform der Erfindung betrifft eine Mischung von einer Mehrzahl an Reaktivverdünnern, insbesondere von drei oder insbesondere mehr als drei Reaktivverdünnern, welche als solche bei der Herstellung einer erfindungsgemäßen Kunstharzmischung oder eines erfindungsgemäßen Kunstharzes verwendet werden kann.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was jeweils besondere Ausführungsformen der Erfindung darstellt.

Unter "radikalisch härtbar" ist zu verstehen, dass die betreffende Kunstharzmischung oder das betreffende Kunstharzsystem bei der Verwendung unter radikalischer Kettenpolymerisation aushärten. "Radikalisch härtbar" kann auch durch "radikalisch polymerisierbar" ersetzt werden.

Wo "ein" oder "eine" verwendet wird, ist dies (sofern nicht anders, beispielsweise durch Voranstellen von "mindestens", ersichtlich) in erster Linie als der unbestimmte Artikel zu verstehen und beinhaltet "ein (in Zahlen: 1) oder mehrere" wie auch nur ein(e) (in Zahlen: 1). Anders ausgedrückt, bedeutet "ein" oder "eine" "ein(e) oder mehr, z.B. zwei oder drei oder vier".

Vor- und nachstehend bedeuten Anteils- oder Gehaltsangaben in Prozent jeweils Gewichtsprozent ("Gew.-%") oder den relativen Gewichtsanteil, soweit nicht anders angegeben, bezogen auf alle Inhaltsstoffe einer erfindungsgemäßen Harzzusammensetzung (ohne Verpackungsmaterial), wenn nicht anders angegeben oder ersichtlich.

Beinhalten" oder "umfassen" bedeutet, dass neben den genannten Bestandteilen oder Merkmalen noch andere vorhanden sein können, steht also für eine nicht abschließende Aufzählung, im Gegensatz zu "bestehen aus", das eine abschließende Aufzählung der bei seiner Verwendung aufgezählten Komponenten oder Merkmale bedeutet. Wo eine nicht abschließende Aufzählung vorliegt, kann an ihrer Stelle die abschließende Variante als besondere Form eingesetzt werden.

Wo das Attribut "ferner" erwähnt wird, bedeutet dies, dass Merkmale ohne dieses Attribut stärker bevorzugt sein sollen.

"Und/oder" bedeutet, dass die genannten Merkmale/Substanzen jeweils alleine oder in Kombination von zwei oder mehr der jeweils genannten Merkmale/Substanzen vorliegen können.

Statt "zur Anwendung in der Befestigungstechnik" kann auch "für die Befestigungstechnik" stehen.

Unter "Kunstharzmischung" ist eine Kunstharzzusammensetzung zu verstehen, der Kürze halber wird hierin gelegentlich synonym der Ausdruck "Harzmischung" oder für den für den Anteil an reaktiven ungesättigten Edukten der Ausdruck "Reaktivharz" verwendet.

Wo "(Meth)acrylate" oder -"(meth)acrylate" erwähnt werden, bedeutet dies Acrylate, Methacrylate oder Mischungen davon.

Als radikalisch härtbare Reaktivharze sind erfindungsgemäß ethylenisch ungesättigte Verbindungen und ferner Verbindungen mit Kohlenstoff-Kohlenstoff-Dreifachbindungen geeignet.

Besonders geeignet ist die Gruppe der ethylenisch ungesättigten Verbindungen, die Styrol und Derivate, Vinylester, wie (Meth)Acrylate (insbesondere Methyl(meth)acrylate, Urethan(meth)acrylate oder Itaconate, ferner ungesättigte Polyester, Vinylether, Allylether, Dicyclopentadien-Verbindungen und ungesättigte Fette, umfasst.

Besonders bevorzugt sind vor allem ein oder mehrere solche Kunstharze (Reaktivharze), die (radikalisch) härtbare Ester mit ein oder mehreren ungesättigten Carbonsäureresten (wie beispielsweise in DE 10 2014 103 923 A1 beschrieben) umfassen; vorzugsweise jeweils propoxylierte oder insbesondere ethoxylierte aromatische Diol-, wie Bisphenol-A-, Bisphenol-F- oder Novolak-(insbesondere di-) (meth)acrylate; Epoxy(meth)acrylate, insbesondere in Form von Umsetzungs-produkten von Di- oder Polyepoxiden, z.B. Bisphenol-A-, Bisphenol-F- oder Novolak-di- und/ oder-poly-glycidylethern, mit ungesättigten Carbonsäuren, z.B. C₂-C₇-Alkencarbonsäuren, wie insbesondere (Meth)acrylsäure; Urethan- und/oder Harnstoff-(meth)acrylate - insbesondere Urethan(meth)acrylate, die z.B. durch Umsetzung von Di- und/ oder Polyisocyanaten (höherfunktionelle Isocyanate) mit geeigneten (Meth)Acrylverbindungen (wie z.B.: Hydroxyethyl- oder Hydroxypropyl(meth)acrylat), gegebenenfalls unter Mitwirkung von Hydroxyverbindungen, die mindestens zwei Hydroxylgruppen enthalten, wie sie beispielsweise in der DE 39 40 309 A1 und/oder DE 4111828 A1 beschrieben sind, erhalten werden; oder ungesättigte Polyesterharze, oder dergleichen, oder zwei oder mehr dieser härtbaren ungesättigten organischen Komponenten; wobei der Gewichtsanteil der ungesättigten Reaktivharze beispielsweise in einem Gewichtsanteil von 0,1 bis 90 Gew.-%, z.B. zwischen 0,5 und 75 Gew.-% oder zwischen 1 und 40 Gew.-% oder insbesondere von 15 bis 60, beispielsweise 20 bis 50 Gew.-%, beträgt.

In besonderen und bevorzugten Ausführungsformen der Erfindung vorhandene bzw. verwendete Urethan(meth)acrylate in radikalisch härtbaren Kunstharzen auf Urethanmethacrylatbasis ("Vinylesterurethane") in erfindungsgemäßen Kunstharz-Befestigungssystemen sind solche, die aus der Umsetzung eines vorverlängerten monomeren Di- oder Polyisocyanats und/oder aus der Umsetzung eines monomeren oder polymeren Di- oder Polyisocyanats (z.B.: PMDI, MDI) mit Hydroxyalkyl(meth)acrylat, wie Hydroxyethyl- oder Hydroxypropyl(meth)acrylat, resultieren. Die Art und Weise zur Durchführung von Vorverlängerungsreaktionen und die Vielzahl der Vorverlängerungsreaktionsmöglichkeiten sind dem Fachmann bekannt und werden hier nicht alle explizit beschrieben. Es sei hier beispielhaft auf die Anmeldungen EP 0508183 A1 und EP 0432087 A1 verwiesen.

Beispiele für in besonderen Ausführungsformen der Erfindung vorhandene bzw. verwendete Epoxy(meth)acrylate sind solche der Formel 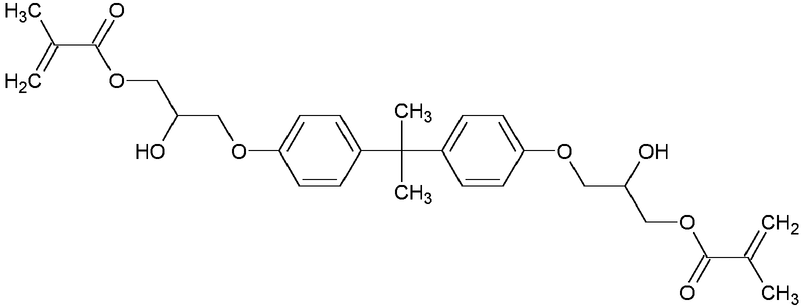 oder allgemeiner unter Berücksichtigung der Vorverlängerungsreaktion bei der Herstellung des Bisphenol-A-diglycidylethers der Formel 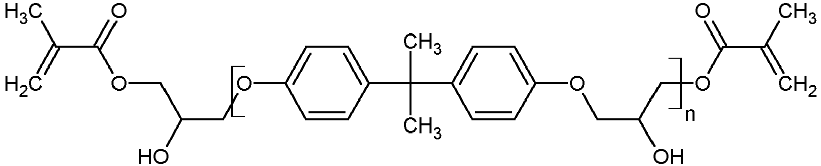 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich). Auch diese werden nachfolgend unter dem Begriff "Vinylester" subsumiert.

Beispiele für in besonderen Ausführungsformen der Erfindung vorhandene bzw. verwendete propoxylierte oder insbesondere ethoxylierte aromatische Diol-, wie Bisphenol-A-, Bisphenol-F- oder Novolak-(insbesondere di-)(meth)acrylate, sind vorzugsweise solche der Formel 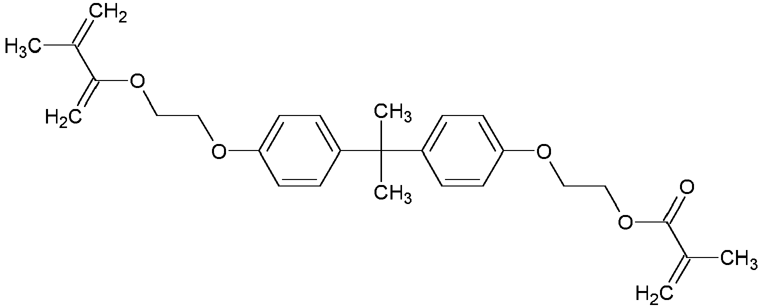 oder allgemein noch unter Berücksichtigung höherer Ethoxylierungsgrade: 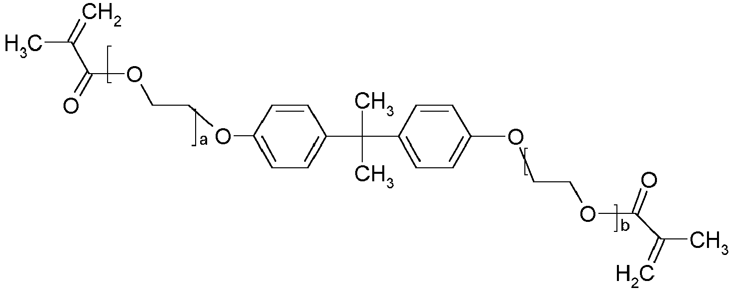 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich, für isoliert betrachtete Einzelmoleküle jeweils nur ganze Zahlen). Im Falle der propoxylierten Verbindungen stehen anstelle der divalenten Reste (-O-(CH₂)-(CH₂))ₙ- solche der Formel (-O-(CH(CH₃)-(CH₂))ₙ- oder (-O-(CH₂)-(CH(CH₃)))ₙ-, wobei n (für jede Seite des Moleküls unabhängig) eine der gerade für a oder b definierten Bedeutungen hat. Die Zahlen a, b oder n sind vorzugsweise Mittelwerte von maximal 20, insbesondere von maximal 10.

Auch diese propoxylierten oder insbesondere ethoxylierten Verbindungen werden vor- und nachstehend unter dem Begriff "Vinylester" subsumiert.

Beispiele für in besonderen Ausführungsformen der Erfindung vorhandene bzw. verwendete Urethan(meth)acrylate sind solche, die aus der Umsetzung eines monomeren oder polymeren Di- oder Polyisocyanats (z.B. MDI und/oder PMDI), das gegebenenfalls auch vorverlängert sein kann, mit Hydroxyethyl- oder Hydroxypropylmethacrylat resultieren.

Eine besondere Ausführungsform aller Erfindungsvarianten beinhaltet solche Urethan(meth)-acrylatharze, die nach dem nachfolgend kurz skizzierten Verfahren hergestellt werden:
Es handelt sich um Verfahren zur Herstellung von Vinylesterurethanharzen, insbesondere Urethan(meth)acrylat-Harzen (nachfolgend auch U(M)A-Harze), welches dadurch gekennzeichnet ist, dass als Edukt für die Herstellung des Vinylesterurethan-, insbesondere U(M)A-Harzes ein Isocyanat mit einer mittleren Funktionalität von 2 oder mehr als 2 (die auch durch Mischung von Isocyanaten einer Funktionalität unter zwei mit Isocyanaten einer Funktionalität größer 2 erzielt werden kann), beispielsweise von 2 bis 5, zum Beispiel von 2,1 bis 4, vorteilhaft z.B. von 2,2 bis 3,5, mit einem mindestens eine C-C-Doppelbindung (nicht konjugierte - olefinische Bindung) aufweisenden aliphatischen Alkohol, insbesondere einem Hydroxyalkyl(meth)acrylat, vorzugsweise Hydroxyniederalkyl(meth)acrylat, wie Hydroxyethyl(meth)acrylat oder Glycerindimethacrylat oder insbesondere Hydroxypropyl(meth)acrylat, vorzugsweise 2-Hydroxypropylmethacrylat (HPMA), umgesetzt wird. Das technisch verfügbare HPMA ist dabei als eine Mischung aus 2-Hydroxypropylmethacrylat und Hydroxyisopropylmethacrylat zu sehen, - auch andere eine olefinische Bindung aufweisende aliphatische Alkohole können als technische Isomerengemische oder als reine Isomere vorliegen. Bei Verwendung eines HPMA-Überschusses kann das überschüssige HPMA zusätzlich als Reaktivverdünner wirken.

Unter einem Isocyanat mit einer mittleren Funktionalität von 2 oder mehr als 2, beispielsweise von 2 bis 5, zum Beispiel von 2,1 bis 4, vorteilhaft z.B. von 2,2 bis 3,5, ist beispielsweise ein Polyisocyanat mit Uretdion-, Isocyanurat-, Iminooxadiazinon-, Uretonimin-, Biuret-, Allophanat- und/oder Carbodiimid-Strukturen (vorteilhaft mit einer Molekulargewichtsverteilung derart, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanten zusammengesetzt sind (siehe genauer Polymerdefinition nach REACH)) oder vorzugsweise eine (z.B. in technischen Herstellprozessen typischerweise anfallende oder nachfolgend gezielt (z.B. durch Zugabe und/oder Abdestillation von Monomeren oder Monomerenmischungen) eingestellte) Mischung von (i) ein oder mehreren monomeren Mono- oder insbesondere Diisocyanaten, wie Diphenylmethandiisocyanat (MDI), insbesondere 4,4'-Diphenylmethyldiisocyanat oder 2,2'-Diphenylmethandiisocyanat oder Mischungen von Diphenylmethandiisocyanat-Isomeren (mit unterschiedlichen Positionen der Isocyanatgruppen an den Phenylkernen) wie den gerade genannten, mit (ii) ein oder mehreren "polymeren" Diphenylmethandiisocyanaten (PMDI), das heißt vorzugsweise Roh-MDI (Rohprodukt der industriellen Herstellung von MDI ohne Trennung der einzelnen Isomeren z.B. durch Destillation) mit (d.h. beinhaltend) mehreren Isomeren und höherfunktionellen Homologen und z.B. einem mittleren Molekulargewicht in der Größenordnung von 200 bis 800 g/mol und einer Funktionalität wie oben angegeben, z.B. mit einem mittleren Molekulargewicht von 280 bis 500, z.B. 310 bis 480 und einer Funktionalität von 2,4 bis 3,4, z.B. von 3,2. Bevorzugt sind marktübliche PMDI, die aus dem Roh-MDI selbst oder auch aus dem Roh-MDI z.B. durch Abdestillation und/oder Zugabe von monomerem MDI erhalten werden und ein mittleres Molekulargewicht von 310-450 aufweisen und auch Uretdion-, Isocyanurat-, Iminooxadiazinon-, Uretonimin-, Biuret-, Allophanat- und/oder Carbodiimid-Strukturen beinhalten können. Besonders bevorzugt ist marktübliches PMDI mit einer Molekulargewichtsverteilung derart, dass keine einzelne Molekülspezies zu mehr als 50 Gew.-% vorliegt. Die Funktionalität wird in der Regel als mittlere Funktionalität vom Hersteller angegeben.

Das Verfahren zur Herstellung von Urethan(meth)acrylat-Harzen findet vorzugsweise in Gegenwart von einem Katalysator statt, wobei entsprechende Katalysatoren, die die Reaktion zwischen Hydroxylgruppen und Isocyanatgruppen katalysieren, dem Fachmann hinreichend bekannt sind, beispielsweise einem tertiären Amin, wie 1,2-Dimethylimidazol, Diazabicyclooctan, Diazabicyclononan, , oder einer Organometallverbindung (z.B. von K, Sn, Pb, Bi, Al und insbesondere auch von Übergangsmetallen wie Ti, Zr, Fe, Zn, Cu); sowie Mischungen von zwei oder mehr davon; beispielsweise (bezogen auf die Reaktionsmischung) in einem Anteil von 0,001 bis 2,5 Gew.-%; vorzugsweise in Gegenwart von *Stabilisatoren* (Inhibitoren), wie beispielsweise Phenothiazin, TEMPO, TEMPOL, Hydrochinon, Dimethylhydrochinon, Triphenylphosphit, tert.-Butylhydrochinon, Hydrochinonmonoethylether, tert.-Butylbrenzkatechin und/oder p-Benzochinon, sowie Mischungen von zwei oder mehr davon; z.B. in einer Menge von 0,0001 bis 2,5 Gew.-%, bezogen auf die Reaktionsmischung, bei bevorzugten Temperaturen z.B. im Bereich von 0 bis 120 °C, vorteilhaft von 50 bis 95 (oder bis 80) °C.

Die Reaktion kann ohne Lösungsmittel (der mindestens eine C-C-Doppelbindung aufweisende aliphatische Alkohol, insbesondere das Hydroxy(nieder)alkyl(meth)acrylat selbst dient dann als Lösungsmittel) oder in Gegenwart eines geeigneten Lösungsmittels durchgeführt werden, beispielsweise eines weiteren Reaktivverdünners. "Reaktiv" bezieht sich dabei hier auf die Formulierung des Klebemittels und dessen Aushärtung, nicht auf die Addition des Alkohols an das Isocyanat.

Die Reaktion kann auch derart geführt werden, dass über eine Vorverlängerung ein Präpolymer gebildet und erst danach die noch übrigen Isocyanatgruppen mit dem mindestens eine C-C-Doppelbindung aufweisende aliphatische Alkohol, insbesondere dem Hydroxy(nieder)-alkyl(meth)acrylat, wie oben oder unten beschrieben umsetzt.

Für die Herstellung des Präpolymeren finden dabei zum Erzielen einer mittleren Isocyanat-Funktionalität von zwei oder insbesondere größer als zwei die oben genannten Isocyanate und Polyole mit zwei oder mehr Hydroxygruppen pro Molekül und/oder Polyamine mit zwei oder mehr Aminogruppen pro Molekül oder Aminole mit zwei oder mehr Amino- und Hydroxygruppen pro Molekül Verwendung, oder es werden Isocyanate mit einer Funktionalität von 2 mit Polyolen, Polyaminen oder Aminolen mit einer mittleren OH- und/ oder Amino-Funktionalität von mehr als 2 eingesetzt.

Polyole (Di- oder höherfunktionale Alkohole) sind dabei insbesondere zwei- oder höherfunktionale Alkohole, z.B. Folgeprodukte des Ethylen- oder Propylenoxids, wie Ethandiol, Di- bzw. Triethylenglykol, Propan-1,2- oder-1-3-diol, Dipropylenglykol, andere Diole, wie 1,2-, 1,3- oder 1,4-Butandiol, 1,6-Hexandiol, Neopentylglykol, 2-Ethylpropan-1,3-diol oder 2,2-Bis(4-hydroxycyclohexyl)-propan, Triethanolamin, Bisphenol A oder Bisphenol F oder deren Oxyethylierungs-, Hydrierungs- und/oder Halogenierungsprodukte, höherwertige Alkohole, wie z.B. Glycerin, Trimethylolpropan, Hexantriol und Pentaerythrit, hydroxylgruppenhaltige Polyether, z.B. Oligomere aliphatischer oder aromatischer Oxirane und/ oder höherer cyclischer Ether, z.B. Ethylenoxid, Propylenoxid, Styroloxid und Furan, Polyether mit jeweils endständigem Hydroxy, die in der Hauptkette aromatische Struktureinheiten enthalten, z.B. die des Bisphenol A bzw. F, hydroxylgruppenhaltige Polyester auf der Basis der oben genannten Alkohole bzw. Polyether und Dicarbonsäuren bzw. ihrer Anhydride, z.B. Adipinsäure, Phthalsäure, Isophthalsäure, Terephthalsäure, Tetra- bzw. Hexahydrophthalsäure, Endomethylentetrahydrophthalsäure, Maleinsäure, Fumarsäure, Itaconsäure, Sebacinsäure oder dergleichen. Besonders bevorzugt sind Hydroxylverbindungen mit Kettenversteifung bewirkenden aromatischen Struktureinheiten, Hydroxyverbindungen mit ungesättigten Komponenten zur Erhöhung der Vernetzungsdichte, wie Fumarsäure, oder verzweigte oder sternförmige Hydroxyverbindungen, insbesondere drei-bzw. höherfunktionale Alkohole und/ oder Polyether bzw. Polyester, die deren Struktureinheiten enthalten. Besonders bevorzugt sind Niederalkandiole (ergeben divalente Reste -O-Niederalkylen-O-).

Aminole (Aminoalkohole) sind Verbindungen, die insbesondere eine oder mehrere Hydroxy- und eine oder mehrere Aminogruppen in ein und demselben Molekül enthalten. Bevorzugte Beispiele sind aliphatische Aminole, insbesondere Hydroxyniederalkylamine (ergeben Reste -NH-Niederalkylen-O- oder-O-Niederalkylen-NH-), wie Ethanolamin, Diethanolamin oder 3-Aminopropanol, oder aromatische Aminole, wie 2-, 3- oder 4-Aminophenol.

Polyamine (Di- oder höherfunktionale Amine) sind organische Aminoverbindungen mit 2 oder mehr Aminogruppen, insbesondere aliphatische Di- oder Polyamine, insbesondere Niederalkandiamine (ergeben Reste-NH-Niederalkyl-NH-), wie Ethylendiamin, 1,3-Diaminopropan, Tetra- oder Hexamethylendiamin oder Diethylentriamin, oder aromatische Di- oder Polyamine, wie Phenylendiamin, 2,4- und 2,6-Toluoldiamin, oder 4,4'-Diaminodiphenylmethan, Polyetherdiamine (Polyethylenoxide mit endständigen Aminogruppen) oder Polyphenyl/Polymethylen-polyamine, die durch Kondensation von Anilinen mit Formaldehyd erhältlich sind.

Das Verhältnis von freien Isocyanatgruppen des oder der Isocyanate zu Hydroxygruppen des oder der Hydroxyniederalkyl(meth)acrylate wird vorteilhaft derart gewählt, dass eine schnelle und vollständige Umsetzung der Isocyanatgruppen resultiert, das heißt, die Mol-menge der Hydroxygruppen (und damit die korrelierende Mol-Menge an Hydroxyniedera-lkyl(meth)acrylat) ist größer als die Mol-Menge der Isocyanatgruppen, z.B. 1,03 bis 5-mal so groß, wie z.B. 1,05 bis 4 mal so groß oder 1,1 bis 3 mal so groß . Überschüssiges Hydroxy-niederalkyl(meth)acrylat dient als Reaktivverdünner.

Die mittels des Verfahrens erhältlichen U(M)A-Harze sind solche, die erfindungsgemäß verwendbare bzw. vorhandene Urethan(meth)acrylatharze darstellen in den Reaktiv-Kunstharzen auf Urethan(meth)acrylatbasis.

"Auf Urethan(meth)acrylatbasis" ("UM-Harz Basis") bedeutet insbesondere, dass die erfindungsgemäßen Kunstharz-Befestigungssysteme neben den bisher genannten Bestandteilen auch weitere übliche Bestandteile (z.B. Additive oder andere oben oder unten genannte Bestandteile) beinhalten können. Diese weiteren Bestandteile können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Bestandteile möglich. Vorzugsweise ist als einziges radikalisch härtbares Kunstharz (Reaktivharz) ein Urethanmethacrylat wie vorstehend beschrieben vorhanden.

Beispiele für weitere Inhaltsstoffe (Zusätze) von erfindungsgemäßen Kunstharzmischungen oder Kunstharzsystemen sind beispielsweise metallsalzbasierte oder vorzugsweise aminische Beschleuniger, Inhibitoren, nicht reaktive Verdünner, reaktive Verdünner, Thixotropiermittel, Füllstoffe und/oder weitere Additive, oder Mischungen von zwei oder mehr dieser Inhaltsstoffe.

Als metallsalzbasierte Beschleuniger kommen Cu-, Co-, Mn-, Sn- oder Ce-Salze, wie z.B. Kupferoktanoat, in Frage. Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem oder propoxyliertem Toluidin, Anilin oder Xylidin, beispielsweise N,N-bis(hydroxypropyl- oder hydroxyethyl)-toluidinen oder Dipropoxy-p-toluidin oder-xylidinen, wie N,N-bis(hydroxypropyl- oder hydroxy-ethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, ferner Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxybenzyl)-benzol, (nicht-alkylierte oder alkylierte) Brenzcatechine wie tert.-Butylbrenzcatechin, 3,5-Di-tert-butyl-1,2-benzoldiol oder, oder insbesondere 4-Methoxyphenol, oder Gemische von zwei oder mehr davon, in Frage. Diese haben vorzugsweise einen Anteil von bis zu 1 Gew.-%, insbesondere falls vorhanden zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beeinflussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetramethylpiperidin-4-ol ("4-OH-TEMPO" oder "TEMPOL"). Der Gewichtsanteil der nicht-phenolischen Inhibitoren liegt (falls vorhanden) vorzugsweise, bezogen auf die Reaktionsharzformulierung, im Bereich von 1 ppm (Gew. bezogen) bis 2 Gew.-%, insbesondere z.B. im Bereich von 5 ppm bis 1 Gew.-%.

Als nicht reaktive Verdünner können beispielsweise Pflanzenöle, wie Rizinusöl, oder ferner Bioalkohole und Fettsäuren und deren Ester zugesetzt werden, oder Gemische von zwei oder mehr davon, beispielsweise in einem Anteil von 3 bis 60 Gew.-%, z.B. von 4 bis 20 Gew.-%.

Als Thixotropiermittel können übliche thixotropieverursachende Rheologiehilfsmittel verwendet werden, wie pyrogene Kieselsäure oder (z.B. mit Silanen) oberflächenbehandelte Kieselsäure. Sie können z.B. in einem Gewichtsanteil von 0,01 bis 50 Gew.-%, beispielsweise von 0,05 bis 20 Gew.-%, vorzugsweise von 0,1 bis 10 Gew.-%, zugesetzt sein.

Als Füllstoffe können übliche Füllstoffe mit größerem oder sehr feinem Mittelkorn, insbesondere Kreiden, Gips, Branntkalk, Sand, wie Quarzsand, Quarzmehl, Korund, Glas (auch als Hohlkugeln), Porzellan, Keramik, Silikate, Tone oder Schwerspat, die als Pulver in körniger Form oder in Form von Formkörpern zugesetzt sein können, beinhaltet sein, oder andere, wie Kern- oder Schalenmehle aus Pflanzen, was den biogenen Kohlenstoffanteil erhöht, wie Olivenkernmehl, Kokosnussschalenmehl oder ferner Walnussschalenmehl, oder Gemische von zwei oder mehr davon, wobei die Füllstoffe ferner oder insbesondere auch silanisiert sein können. Die Füllstoffe können in einer oder in mehreren Komponenten eines erfindungsgemäßen mehrkomponentigen Kunstharz-Befestigungssystem, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 50 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann). Zusätzlich oder alternativ zu ein oder mehreren der genannten Füllstoffe können ferner hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Füllstoffe können in einer oder bei Mehrkomponentenzusammensetzungen in mehreren Komponenten eines erfindungsgemäßen Kunstharzsystems, beispielsweise in Form eines Mehrkomponentenkits (insbesondere Zweikomponentenkits) , enthalten sein. Ihr Anteil beträgt vorzugsweise 0 bis 80 Gew.-%, insbesondere 5 bis 80, z.B. 40 bis 70 Gew.-%.

Auch weitere Additive können zugesetzt sein, wie nicht reaktive Verdünnungsmittel, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, wobei ein Farbcode (z.B. unterschiedliche oder identische Einfärbung von Komponenten eines Zwei- oder Mehrkomponentenkunstharzsystems) weiter zur Identifizierbarkeit beitragen kann, oder ferner Weichmacher, oder Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Als Mehrzahl von unterschiedlichen Reaktivverdünnern sind vier oder mehr, fünf oder mehr oder sechs oder mehr, vorzugsweise 8 oder mehr, wobei die Obergrenze insbesondere bei 50, bevorzugt bei 40, stärker bevorzugt bei 30, vorzugsweise bei 20 oder bei 15 liegt, z.B. drei oder vorzugsweise vier, fünf, sechs, sieben, acht, neun, zehn, elf, zwölf, dreizehn oder vierzehn, fünfzehn, sechzehn, siebzehn, achtzehn, neunzehn oder zwanzig, noch stärker vorzugsweise acht, neun, zehn, elf, zwölf, dreizehn oder vierzehn, fünfzehn, sechzehn, siebzehn, achtzehn, neunzehn oder zwanzig, Reaktivverdünner zu verstehen.

Die Reaktivverdünner sind dabei aus allen in der Befestigungstechnik gängigen oder für die Befestigungstechnik verwendbaren radikalisch härtbaren Reaktivverdünnern ausgewählt. Handelt es sich bei den Reaktivverdünnern um solche, die (beispielsweise herstellungsbedingt) eine Mischung einer Reihe von Isomeren und Nebenprodukten umfassen (und so beispielsweise eine Molekulargewichtsverteilung aufweisen, wie es beispielsweise bei PEG200DMA der Fall ist, oder zwei Molekülspezies umfassen, wie bei Hydroxypropylmethacrylat aus Synthese durch Umsetzung von Propylenoxid mit Methacrylsäure, welches 1- und 2-Hydroxypropylmethacrylat beinhaltet), so wird ein Reaktivverdünner mit einer solchen Mischung als *ein* (1) Reaktivverdünner bei der Definition angesehen, also die Isomeren und Nebenprodukte nicht jeweils für sich gezählt. Vorzugsweise werden als Reaktivverdünner solche gezählt, die keine Molekulargewichtsaufteilung aufweisen, also im Wesentlichen (d.h. insbesondere zu mindestens 65, bevorzugt zu mindestens 95 Gew.-%, vorzugsweise zu mindestens 98 Gew.-%, bis zu 100 Gew.-% nur einer Molekülstruktur aufweisen.

So kommen radikalisch härtende ungesättigte Reaktivverdünner in biogener oder nichtbiogener Form in Frage, worunter in erster Linie solche zu verstehen sind, die aus radikalisch aushärtbaren (was "(z.B. nach Härterzugabe) aushärtend" einschließt) Verbindungen, also organischen Verbindungen mit ungesättigten (z.B. olefinischen) Resten, bestehen, z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate (einschließlich Hydroxyniederalkyl(meth)acrylaten, die auch aus der U(M)A-Harzherstellung bereits bei Überschuss als Reaktivverdünner beinhaltet sein können, wie Benzyl(meth)acrylat, Hydroxybutyl(meth)acrylat, Hydroxypropyl(meth)acrylat (HPMA) oder Hydroxy-ethyl(meth)-acrylat, Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandiol-di(meth)acrylat, Butandioldi(meth)acrylat, wie 1,3- oder insbesondere 1,4-Butandioldi(meth)-acrylat, Hexandioldi(meth)acrylat, oder 1,10-Decandioldi(meth)acrylat; Diethylglykol-di(meth)acrylat, Glycerinformalmethacrylat, radikalisch härtbare Oligoalkylenglykol-di(meth)acrylate, wie in DE 10 2014 109355 A1 beschrieben, die hier durch Bezugnahme aufgenommen wird, Trimethylolpropantri(meth)acrylat, Glycerindi(meth)acrylat, Gly-cerintri(meth)acrylat, Polyglycerinpoly(meth)acrylat, Ethylenglykoldimethacrylat, Polyethylenglykoldi(meth)acrylat, Cycloalkyl-, Bicycloalkyl- oder Heterocyclyl(meth)acrylate, worin Cycloalkyl oder Bicycloalkyl ferner substituiert sein kann und 5 bis 7 Ringkohlenstoffatome aufweist und Heterocyclyl 5 oder 6 Ringatome hat, ferner Substituenten tragen kann und 1 oder 2 Ringheteroatome ausgewählt aus N, O und S aufweist, wie Tetrahydrofurfuryl(meth)acrylat oder Isobornyl(meth)acrylat, oder Acetacetoxyalkyl(meth)acrylat; oder ferner Styrole, wie Styrol, α-Methylstyrol, Vinyltoluol, tert.-Butylstyrol und/oder Divinylbenzol; oder Gemische von zwei oder mehr davon.

Bei den erwähnten radikalisch härtbaren Oligoalkylenglykoldi(meth)acrylaten handelt es sich insbesondere um solche der Formel I, 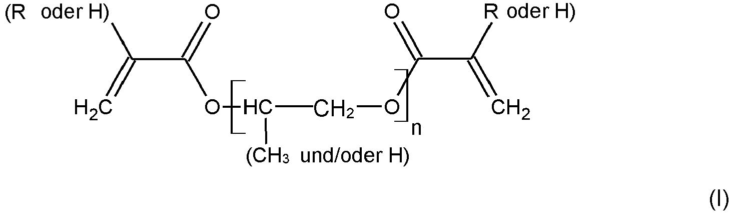 worin die Reste R unabhängig voneinander für C₁-C₇-Alkyl stehen, insbesondere für Methyl, und worin n für durchschnittlich 2,5 bis 13, vorzugsweise für 3,5 bis 10, insbesondere für 4 bis 8 und vor allem für 4,2 bis 7, insbesondere für 4,5 und 6 steht.

Beispiele für entsprechende Verbindungen sind insbesondere Triethylenglykoldi(meth)acrylat (TIEGDMA), Tetraethylenglykoldi(meth)acrylat (TTEGDMA), Polyethylenglykol200-Di(meth)acrylat (PEG200DMA) (Mittelwert n ≈ 4,5) (am stärksten bevorzugt), Polyethylenglykol400-Di(meth)acrylat (PEG400DMA) (Mittelwert n = 9), ferner Polyethylenglykol600-Di(meth)acrylat (PEG600DMA) (Mittelwert n = 13).

Bevorzugt sind andere der genannten Reaktivverdünner als Oligoalylenglykodimethacrylate mit im Mittel mehr als zwei Alkylenglykoleinheiten je Molekül und alkoxylierten Tri-, Tetra- und Pentamethycrylaten.

Ein Vorteil biogener Reaktivverdünner kann sein, dass sie ermöglichen, über den ¹⁴C-Anteil (relatives Isotopenverhältnis) erkannt werden können und so eine weitere Dimension eines spezifischen Nachweises ermöglichen.

Jeder der Reaktivverdünner liegt erfindungsgemäß in einer erfindungsgemäßen Kunstharzmischung (ohne Härterkomponente) vorzugsweise in einer Konzentration von 0,001 bis 10 Gew.-%, insbesondere von 0,001 bis 8 Gew.-%, bevorzugt von 0,001 bis 3 Gew.-%, in besonders bevorzugten Varianten der Erfindungsgegenstände von 0,001 bis <1 Gew.-%, vor allem von 0,01 bis <1 Gew.-% (was überdies Kennzeichnungsfreiheit ermöglicht), vor, wobei die Mengen unabhängig voneinander eingestellt sein können, so dass sowohl über die Art aus auch über die relativen Mengen der Reaktivverdünner in einer erfindungsgemäßen Kunstharzmischung bzw. einem erfindungsgemäßen Kunstharzsystem eine weitere Differenzierungsmöglichkeit zur Identifikation gegeben ist.

Die erfindungsgemäß verwendeten Reaktivverdünner haben vorzugsweise Molekülmassen (Molekulargewichte) von 1000 g/mol oder weniger, insbesondere von 800 g/mol oder weniger, insbesondere von 600 g/mol oder weniger, auf.

Für ein erfindungsgemäßes Kunstharzsystem bedarf es als eines Anteils oder insbesondere einer Komponente eines Härters. Der Härter beinhaltet mindestens einen Radikalstarter als eigentlichen Initiator. Der Begriff "Härter" bedeutet dabei vorzugsweise vor- und nachstehend reine Initiatoren oder phlegmatisierte Initiatoren mit oder ohne Füllstoffzusatz und/oder weitere Zusätze (also bei Zwei- oder Mehrkomponenten-Kunstharzystemen eine Härterkomponente), wie Verdickungsmittel und/oder weitere Zusatzstoffe, wie Farbstoffe, Additive und dergleichen, mit anderen Worten, eine komplette Härterkomponente. Zur Phlegmatisierung können übliche Zusätze, wie Gips, Kreide, Ethylenglykoldibenzoat, Wasser, pyrogene Kieselsäure, Phthalate, Chlorparaffin oder dergleichen, zugesetzt sein. Daneben können auch noch Füllstoffe, Verdickungsmittel, Füllstoffe (wie z.B. oben genannt) und weitere der oben genannten Zusätze, ferner (insbesondere zur Herstellung einer Paste oder Emulsion) Lösungsmittel, wie Wasser, zugesetzt sein. Der Anteil aller Zusätze kann beispielsweise bei einem Gewichtsanteil von insgesamt 0,1 bis 70 Gew.-%, z.B. von 1 bis 40 Gew.-%, liegen.

Bezogen auf die Härterkomponente liegt der Anteil des Initiators (Radikalbildners zum Start einer radikalischen Kettenreaktion) in einer möglichen bevorzugten Ausführungsform der Erfindung bei 0,5 bis 90 Gew.-%, insbesondere bei 0,9 bis 30 Gew.-%. In einer besonders bevorzugten Ausführungsform liegt der Anteil des Initiators bezogen auf die Härterkomponente und/oder das Gesamtsystem bei < 5 %, insbesondere bei < 1 %.

Als Initiator für die Härtung der erfindungsgemäßen Kunstharzsysteme finden beispielsweise radikalbildende Peroxide, z.B. organische Peroxide, wie Diacylperoxide, z.B. Dibenzoylperoxid, Ketonperoxide, wie Methylethylketonperoxid oder Cyclohexanonperoxid, oder Alkylperester, wie tert-Butylperbenzoat, oder ferner Azoinitiatoren oder anorganische Peroxide, wie Persulfate oder Perborate, sowie Mischungen davon Verwendung.

Der Anteil des Härters an einem erfindungsgemäßen Kunstharz-Befestigungssystem insgesamt liegt dabei vorzugsweise in einem Bereich von 0,2 bis 60 Gew.-%, z.B. 0,5 bis 50 Gew.-%, insbesondere bei 1 bis 30 Gew.-% .

Alternativ kann für die Härtung der erfindungsgemäßen Reaktiv-Kunstharzformulierungen ein thiolbasiertes Härtersystem gemäß der Patentanmeldung DE 10 2013 114 061 A1 oder ein auf CH-aciden Verbindungen basiertes System wie in DE 10 2015 003 221 A1 beschrieben verwendet werden, die hier diesbezüglich durch Bezugnahme aufgenommen werden. Ein weiteres Härtersystem (Initiatorsystem) umfassend mindestens einen mindestens einen Aktivator in Form eines Metallsalzes und als Radikalstarter einen solchen auf der Basis von Aldehyden oder Ketonen jeweils in Kombination mit Aminen, oder auf der Basis von Aldiminen oder Ketiminen, findet sich in WO2016/206777 A1, die hier ebenfalls durch Bezugnahme aufgenommen wird.

Bei der erfindungsgemäßen Verwendung zur Kontrolle der Identität von Kunstharzmischungen oder Kunstharzsystemen und dem entsprechenden Verfahren werden der Anteil und die Art der Reaktivverdünner durch ein übliches Verfahren zum gleichzeitigen Nachweis kleinerer organischer Moleküle bestimmt.

Brauchbare qualitative und quantitative Nachweisverfahren sind dem Fachmann wohlbekannt. Bevorzugt werden gas- und flüssigkeitschromatographische Methoden ohne oder auch mit massenspektrometrischer Kopplung eingesetzt. Die Probenvorbehandlung umfasst in diesem Falle auch die Abtrennung fester Bestandteile wie Füllstoffe, nach Methoden, die dem Fachmann ebenfalls hinlänglich bekannt sind. Die Grundprinzipien einer quantitativen gaschromatographischen Bestimmung sind in Standardwerken wie z.B. Bruno Kolb: Gaschromatographie in Bildern (Wiley) oder in Normungen wie z.B. DIN 51405 vom Januar 2004 (dort am Beispiel von Kohlenwasserstoffen in Lacken erklärt) oder der ASTM E355-96 (2014) beschrieben und können vom Fachmann ohne weiteres an die hier gestellte quantitativ-analytische Aufgabe angepasst und darauf angewendet werden.

Bevorzugt sind Verfahren, die chromatographische Trennung und dann einzelnen Nachweis der Moleküle des Reaktivverdünners ermöglichen. Hier wären HPLC mit vorher bekannten Laufzeiten der zu bestimmenden Moleküle, LC-MS (insbesondere HPLC-MS), HPLC-NMR oder insbesondere gaschromatographische Methoden wie GC, GC-MS (beispielsweise über die Identifikation von vorab gespeicherten Fragmentierungsmustern ("fingerprints"), oder über Flammenionisationsdetektion (FID) zu nennen. Über die Retentionszeiten (durch Vergleich mit vorbekannten, z.B. zuvor durch Eichung ermittelten Werten für bestimmte Verbindungen) oder im Falle der Verwendung von (insbesondere Durchfluss-) NMR oder insbesondere MS (Massenspektrometrie) können die Identitäten der Reaktivverdünner ermittelt werden. Durch Integration der entsprechenden Peaks (ggf. gegen einen internen Standard oder unter Verwendung von Kalibrierungskurven) kann der Mengenanteil ermittelt werden.

Insbesondere die GC-MS-Methode erlaubt eine einfache qualitative und quantitative Bestimmung. Die HPLC-Methoden bilden ebenfalls eine bevorzugte Analysemethode.

Zugefügte interne Standards, wie beispielsweise Benzylalkohol, können als Referenzen für die Funktionsfähigkeit der Systeme verwendet werden.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden ist, beispielswiese ein Bohrloch.

In einer besonderen und vorteilhaften Ausführungsform der Erfindung sind die härtbaren Komponenten (Reaktivharz) und die zugehörigen Härter (Härterkomponente) eines erfindungsgemäßen Kunstharz-Befestigungssystems voneinander getrennt in einem Zwei- oder ferner Mehrkomponentensystem oder -kit aufbewahrt, bevor sie im Verwendungsfall am gewünschten Ort (z.B. bei oder in einem Loch oder Spalt, wie Bohrloch) miteinander vermischt werden.

Unter einem Mehrkomponentenkit ist insbesondere ein Zwei- oder (ferner) Mehrkomponentenkit (vorzugsweise ein Zweikomponentenkit) mit einer Komponente (A), welche ein oder mehrere radikalisch härtbare Kunstharze (Reaktivharze) in Form einer erfindungsgemäßen Kunstharzmischung beinhaltet, wie oben und nachfolgend beschrieben, und den jeweils zugehörigen Härter als Komponente (B) wie oben und nachfolgend definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten derart enthalten sind, dass ihre Bestandteile während der Lagerung vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion zur Aushärtung stattfinden kann. Auch geeignet sind Patronen, beispielsweise ineinander verschachtelte Patronen, wie Ampullen; sowie insbesondere Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäßen Kunstharzsystems mit oben und nachstehend genannten Zusammensetzungen zur Aufbewahrung vor der Nutzung enthalten sind, wobei vorzugsweise auch ein Statikmischer zum entsprechenden Kit gehört.

Die erfindungsgemäßen Kunstharzsysteme sind folglich vorzugsweise als Zwei- oder Mehr-Komponentensysteme (Mehrkomponentenkit) vorgesehen und werden als solche auch verwendet. Zweikomponentige Systeme können ferner auch solche sein, die eine Komponente z.B. in verkapselter Form in der anderen Komponente beinhalten.

Insbesondere handelt es sich bei den Kunstharz-Befestigungssystemen um Zwei-Komponentensysteme, in denen das Gewichts-verhältnis von Komponente A zu Komponente B bei 99 : 1 bis 1 : 99, bei 99 : 1 bis 50 : 50, bei 99 : 1 bis 60 : 40 oder bei 30 : 70 bis 70 : 30 liegt.

Die Verwendung eines erfindungsgemäßen Kunstharzsystems am gewünschten Einsatzort oder das Verfahren unter dieser Verwendung erfolgt insbesondere durch Mischen der zugehörigen (vor Mischung reaktionshemmend separierten) Komponenten, insbesondere nahe bei und/oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Die Einbringung (Einklebung) des oder der Verankerungsmittel(s) erfolgt vorzugsweise bereits kurze Zeit, z.B. 30 Minuten oder weniger, nach dem Mischen der Komponenten des erfindungsgemäßen Kunstharzsystems. Mit der Mischung und Einbringung der Komponenten beginnt die radikalische Polymerisation, und die endgültige Aushärtung erfolgt in situ.

Unter "Einkleben" ist insbesondere eine (stoff- oder stoff- und formschlüssige) Befestigung von Verankerungsmitteln aus Metall (worunter z.B. Hinterschneidanker, Gewindestangen, Schrauben, Bohranker, Bolzen zu verstehen sind) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels der Verankerungsmittel können dann beispielsweise Geländer, Abdeckungselemente, wie Platten, Fassadenelemente oder andere Bauelemente befestigt werden.

Unter Bausubstrat sind z.B. Materialien für Wände, Decken oder Böden im Baubereich zu verstehen, z.B. Mauerwerk, Beton, oder ferner Holz, Metall oder ferner Kunststoff.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Bestandteilen.

Die Erfindung betrifft auch die in den unabhängigen und insbesondere in den abhängigen Ansprüchen genannten Erfindungsgegenstände, die hier vorzugsweise als in die Beschreibung durch Bezugnahme aufgenommen anzusehen sind.

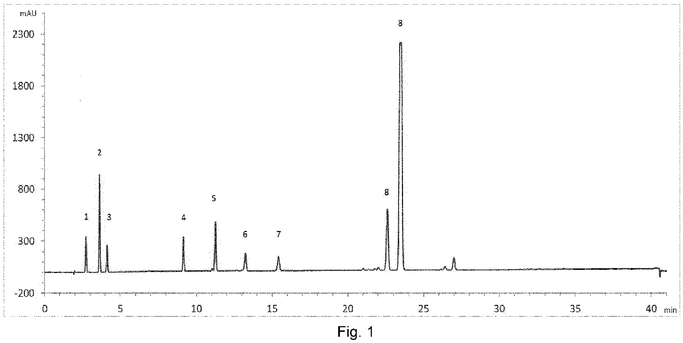

Figur 1 ("Fig. 1") zeigt ein HPLC-Chromatogramm einer Mischung von Reaktivverdünnern wie in Beispiel 2 beschrieben.

Die nachfolgenden Beispiele dienen der Illustration der Erfindung, ohne ihren Umfang einzuschränken, sind jedoch auch bevorzugte Ausführungsformen der Erfindung.

### Beispiel 1: Erfindungsgemäße Zusammensetzungen mit mehreren Reaktivverdünnern und ihre Leistungsfähigkeit

(A) Es wurden drei Mörtel (Reaktivharzkomponenten) auf UM-Harz-Basis (UM-Harz hergestellt z.B. gemäß EP 3 000 792 A1, Beispiel 2) gemischt, wobei einer davon mit nur einem Reaktivverdünner gemischt wurde (vgl. Tabelle 3). Dieser wurde als Referenz verwendet. Die anderen beiden Mörtel wurde mit variierenden Reaktivverdünnern mit einer Konzentration von jeweils unter einem Prozent gemischt (vgl. Tabellen 1 und 2). Die Mörtel wurden mit dem zugehörigen Härter des kommerziell verfügbaren Produkts FIS VT 380 C (mit Dibenzoylperoxid als Härtungsinitiator) im Verhältnis von 10:1 gemischt und Auszugsversuche im Beton durchgeführt.

**Tabelle 1: Zusammensetzung Mörtel-1 auf UM-Harz Basis, variierende Reaktivverdünner**

| **Mörtel-1** | **in Gew. %** |
|---|---|
| UM-Harz | 33,33 |
| Butandioldimethacrylat | 0,86 |
| Hydroxypropylmethacrylat | 0,86 |
| Hydroxyethylmethacrylat | 0,90 |
| Ethylenglykoldimethacrylat | 0,90 |
| Hexandioldimethacrylat | 0,90 |
| Hydroxybutylmethacrylat | 0,90 |
| Inhibitor | 0,10 |
| Additiv | 0,51 |
| Beschleuniger | 0,46 |
| pyrogene Kieselsäure | 2,14 |
| Portlandzement | 16,92 |
| Quarzsand | 40,87 |
| Titandioxid | 0,35 |
| | **100,00** |

**Tabelle 2: Zusammensetzung Mörtel-2 auf UM-Harz Basis, variierende Reaktivverdünner**

| **Mörtel-2** | **in Gew. %** |
|---|---|
| UM-Harz | 33,33 |
| Isobornylmethacrylat | 0,86 |
| Butandioldimethacrylat | 0,86 |
| Benzylmethacrylat | 0,90 |
| Glycerindimethacrylat? | 0,90 |
| Hydroxypropylmethacrylat | 0,90 |
| Ethylenglykoldimethacrylat | 0,90 |
| Inhibitor | 0,10 |
| Additiv | 0,51 |
| Beschleuniger | 0,46 |
| pyrogene Kieselsäure | 2,14 |
| Portlandzement | 16,92 |
| Quarzsand | 40,87 |
| Titandioxid | 0,35 |
| | 100,00 |

**Tabelle 3: Zusammensetzung Mörtel auf UM-Harz Basis, mit einem Reaktivverdünner (Vergleich)**

| **Mörtel-3** | **in Gew. %** |
|---|---|
| UM-Harz | 33,33 |
| Hydroxypropylmethacylat | 5,32 |
| Inhibitor | 0,10 |
| Additiv | 0,51 |
| Beschleuniger | 0,46 |
| pyrogene Kieselsäure | 2,14 |
| Portlandzement | 16,92 |
| Quarzsand | 40,87 |
| Titandioxid | 0,35 |
| | **100,00** |

(B) Zudem wurden drei Mörtel auf Basis von ethoxyliertem Bisphenol A Dimethacrylat gemischt. Davon enthielt ein Mörtel nur einen Reaktivverdünner (dieser wurde als Referenz verwendet), je zwei Mörtel enthielten verschiedene Reaktivverdünner mit Konzentrationen unter einem Prozent (vgl. Tabellen 4 bis 6). Die Mörtel wurden mit dem zugehörigen Härter des kommerziell verfügbaren Produkts FIS V 360 S (mit Dibenzoylperoxid als Härtungsinitiator) im Verhältnis von 5:1 gemischt und Auszugsversuche im Beton durchgeführt (vgl. Tabelle 7).

**Tabelle 4: Zusammensetzung Mörtel auf Basis von ethoxyliertem Bisphenol A Dimethacrylat, mit variierenden Reaktivverdünnern**

| **Mörtel-4** | **in Gew. %** |
|---|---|
| Ethoxyliertes Bisphenol-A-dimethacrylat | 33,33 |
| Butandioldimethacrylat | 0,86 |
| Hydroxypropylmethacrylat | 0,86 |
| Hydroxyethylmethacrylat | 0,90 |
| Ethylenglykoldimethacrylat | 0,90 |
| Hexandioldimethacrylat | 0,90 |
| Hydroxybutylmethacrylat | 0,90 |
| Inhibitor | 0,10 |
| Additiv | 0,51 |
| Beschleuniger | 0,46 |
| pyrogene Kieselsäure | 2,14 |
| Portlandzement | 16,92 |
| Quarzsand | 40,87 |
| Titandioxid | 0,35 |
| | **100,00** |

**Tabelle 5: Zusammensetzung Mörtel auf Basis von ethoxyliertem Bisphenol A Dimethacrylat, mit variierenden Reaktivverdünnern**

| **Mörtel-5** | **in Gew. %** |
|---|---|
| Ethoxyliertes Bisphenol-A-dimethacrylat | 33,33 |
| Isobornylmethacrylat | 0,86 |
| Butandioldimethacrylat | 0,86 |
| Benzylmethacrylat | 0,90 |
| Glyceroldimethacrylat | 0,90 |
| Hydroxypropylmethacrylat | 0,90 |
| Ethylenglykoldimethacrylat | 0,90 |
| Inhibitor | 0,10 |
| Additiv | 0,51 |
| Beschleuniger | 0,46 |
| pyrogene Kieselsäure | 2,14 |
| Portlandzement | 16,92 |
| Quarzsand | 40,87 |
| Titandioxid | 0,35 |
| | 100,00 |

**Tabelle 6: Zusammensetzung Mörtel auf Basis von ethoxyliertem Bisphenol A Dimethacrylat, mit einem Reaktivverdünner (Vergleich)**

| **Mörtel-6** | **in Gew. %** |
|---|---|
| Ethoxyliertes Bisphenol-A-dimethacrylat | 33,33 |
| Hydroxypropylmethacrylat | 5,32 |
| Inhibitor | 0,10 |
| Additiv | 0,51 |
| Beschleuniger | 0,46 |
| pyrogene Kieselsäure | 2,14 |
| Portlandzement | 16,92 |
| Quarzsand | 40,87 |
| Titandioxid | 0,35 |
| | **100,00** |

Bei den Versuchen zeigte sich, dass unabhängig davon wie die Zusammensetzung an Reaktivverdünnern war, vergleichbare Zugfestigkeiten erreicht wurden (vgl. Tabelle 7). Die Zugfestigkeiten wurden wie folgt ermittelt: Für Auszugsversuche mit Gewindestangen M12 wird, gemäß ETAG 001 PART 5 (Herausgeber: DIBt, 2008), wie folgt vorgegangen:
Zunächst werden Bohrlöcher (Durchmesser 14 mm; Tiefe 60 mm) in einen horizontal liegenden Betonprüfkörper (Betontyp C20/25) mit einem Bohrhammer und einem Hammerbohrer eingebracht. Die Bohrlöcher werden mit einem Handausbläser und einer Handbürste gereinigt. Anschließend werden die Bohrlöcher mit der jeweiligen zu prüfenden härtbaren Masse für Befestigungszwecke zu zwei Dritteln befüllt. Je Bohrloch wird eine Gewindestange von Hand eingedrückt. Der Mörtelüberschuss wird mittels eines Spachtels entfernt. Nach 24 Stunden bei Raumtemperatur wird die Gewindestange gezogen bis zum Versagen unter Messung der Versagenslast.

Die Viskositäten der Mörtel wurden mit einem Brookfield Viskosimeter mit der Spindel RV-7 bei 10 Umdrehungen pro Minute nach ca. 3-5 s Einlaufzeit am eingestellten Plateauwert bei Raumtemperatur gemessen.

**Tabelle 5: Viskositäten der Mörtel und Zugfestigkeiten der Mörtel-Härter-Kombinationen**

| Mörtelrezeptur | Mörtel Viskositäten [mPas] | Verbundspannung [N/mm²] |
|---|---|---|
| Mörtel-1 (UM-Harz) | 152.400 | 24,2 |
| Mörtel-2 (UM-Harz) | 140.000 | 26,1 |
| Mörtel-3 (UM-Harz, Vergleich) | 154.800 | 24,7 |
| Mörtel-4 | 117.200 | 20,6 |
| Mörtel-5 | 113.600 | 20,6 |
| Mörtel-6 (Vergleich) | 115.200 | 19,9 |

Dies bestätigt, dass die Harze mit Gemischen von Reaktivverdünnern sehr gute Auszugswerte (Zugfestigkeiten) haben (insbesondere im Vergleich zu denen mit einer gleichen Menge eines Reaktivverdünners) und für die Anwendung geeignete Viskositäten aufweisen und somit sehr gut geeignet sind im Rahmen der Erfindung.

### Beispiel 2: Qualitative und Quantitative Analyse von erfindungsgemäßen Zusammensetzungen mit mehreren Reaktivverdünnern

Zunächst wurde ein Mörtel mit fünf verschiedenen Reaktivverdünnern gemischt. Folgende Reaktivverdünner wurden dabei verwendet:
- Butandioldimethacrylat (BDDMA)
- Hydroxyethylmethacrylat (HEMA)
- Ethylenglykoldimethacrylat (EGDMA)
- Hexandioldimethacrylat (HDDMA)
- Hydroxybutylmethacrylat (HBMA)

Die Zusammensetzung ist in Tabelle 8 dargestellt.

**Tabelle 8: Mustermörte-7**

| **Mörtel-7** | **in Gew. %** |
|---|---|
| Ethoxyliertes Bisphenol A dimethacrylat (E2BADMA) | 33,33 |
| BDDMA | 1,72 |
| HEMA | 0,90 |
| EGDMA | 0,90 |
| Hexandioldimethacrylat | 0,90 |
| Hydroxybutylmethacrylat | 0,90 |
| Inhibitor | 0,10 |
| Additiv | 0,51 |
| Beschleuniger | 0,46 |
| pyrogene Kieselsäure | 2,14 |
| Portlandzement | 16,92 |
| Füllstoffe | 40,87 |
| Titandioxid | 0,35 |
| | **100,00** |

Von diesem Mörtel wurde ein Teil 1:1 in Acetonitril aufgeschlämmt, die Lösung des Überstandes entnommen und durch einen Spritzenvorsatzfilter (0,1 µm) filtriert. Die filtrierte Lösung wurde auf 0,5% (um das 200 fache) verdünnt und mittels HPLC analysiert. Um die Reaktivverdünner in der Mischung zuordnen zu können, wurden zuvor Referenz-Lösungen der einzelnen Rohstoffe mit einer Konzentration von je 0,005% in ACN hergestellt und analysiert.

Über die Integrale der jeweiligen Peaks von Probe und Referenz und der Konzentration der Referenz konnte somit auf die Art und Konzentration der Reaktivverdünner in der Probe und somit auch im Mörtel zurückgeschlossen werden. Die Abweichung von Messwert zu Absolutwert war < 4%.

Die HPLC Analyse erfolgte an einer 1260 Infinity LC System von Agilent Technologies, die Detektion mit einem dynamischen Lichtstreudetektor bei 214 nm. Die Trennung erfolgt mit einer Polaris 3 C 18-A Säule, 180 Å, 3 µm, 4,6 × 150 mm (Hersteller: Agilent Technologies, Artikelnummer: A2001150X046) bei einer Flussrate von 1 mL/min mit dem in der nachfolgenden Tabelle 9 angegebenen Gradienten. Das Probenvolumen beträgt 2 µL. Der Fehler der Reproduzierbarkeit bei mehrmaliger Injektion ist < 1%.

**Tabelle 9: Angaben zum Elutions-Gradienten**

| **Methode** | Zeit [min] | Wasser [%] | Acetonitril [%] |
|---|---|---|---|
| | 0 | 70 | 30 |
| | 8 | 40 | 60 |
| | 12 | 40 | 60 |
| | 35 | 5 | 95 |
| | 38 | 5 | 95 |
| | 38,01 | 70 | 30 |

Fig. 1 zeigt ein Chromatogramm der verwendeten Mörtelmischung. Die unterschiedlichen Reaktivverdünner sind sauber getrennt voneinander erkennbar, und es ist möglich, sie anhand der Peakgrößen und durch Vergleich mit Eichkurven zu quantifizieren.

Es bedeuten:
1 = HEMA
2 = Benzylalkohol (interner Standard)
3 = HBMA
4 = EGDMA
5 = BDDMA
6 = Nebenprodukte eines Rohstoffes
7 = HDDMA
8 = E2BADMA

### Beispiel 3: Kennzeichnungsfreies System

Eine weitere besondere Ausführungsform ist ein kennzeichnungsfreies Kunstharzbefestigungssystem. Dies wird im vorliegenden Beispiel durch Mörtel-8 (Tabelle 10) und Härter 1 (Tabelle 11), abgefüllt in eine 3:1-Kartusche, erreicht. Die Verbundspannung von 21,9 N/mm² zeigt die gute Eignung als Befestigungssystem.

**Tabelle 10: Zusammensetzung Mörtel-8 auf Basis eines kennzeichnungsfreien UM-Harzes mit variierenden Reaktivverdünnern.**

| **Mörtel-8** | **in Gew. %** |
|---|---|
| Kennzeichnungsfreies UM-Harz z.B. wie in EP 3 164 432 B1 beschrieben | 45 |
| Butandioldimethacrylat | 0,95 |
| Hydroxypropylmethacrylat | 0,95 |
| Hydroxyethylmethacrylat | 0,95 |
| Ethylenglykoldimethacrylat | 0,95 |
| Hexandioldimethacrylat | 0,95 |
| Hydroxybutylmethacrylat | 0,95 |
| Isobornylmethacrylat | 0,95 |
| Benzylmethacrylat | 0,95 |
| Methacryloxypropylmethacrylat | 0,95 |
| Additiv | 0,5 |
| Beschleuniger | 0,5 |
| pyrogene Kieselsäure | 2 |
| Füllstoff | 43,45 |
| | **100,00** |

**Tabelle 11: Zusammensetzung Härter-1.**

| **Härter-1** | **in Gew. %** |
|---|---|
| Hexamoll DINCH | 25 |
| Dibenzoylperoxid | 0,98 |
| Pyrogene Kieselsäure, oberflächenbehandelt | 2,5 |
| Füllstoff | 71 |
| Farbstoff | 0,02 |
| Additiv | 0,5 |
| | 100,00 |

## Patentansprüche

1. Radikalisch härtbare Kunstharzmischung, **dadurch gekennzeichnet, dass** sie neben einem radikalisch härtbaren Reaktivharz eine Mehrzahl von unterschiedlichen radikalisch härtbaren Reaktivverdünnern beinhaltet, wobei als Mehrzahl an Reaktivverdünnern vier oder mehr vorhanden sind.

2. Radikalisch härtbare Kunstharzmischung nach Anspruch 1 zur Anwendung in der Befestigungstechnik.

3. Radikalische Kunstharzmischung nach einem der Ansprüche 1 oder 2, **dadurch gekennzeichnet, dass** als Mehrzahl an Reaktivverdünnern fünf Reaktivverdünner oder mehr vorliegen.

4. Radikalische Kunstharzmischung nach einem der Ansprüche 1 bis 3, **dadurch gekennzeichnet, dass** als Mehrzahl an Reaktivverdünnern sechs oder mehr, vorzugsweise acht oder mehr, Reaktivverdünner vorliegen, wobei die Obergrenze bei 50, bevorzugt bei 30, vorzugsweise bei 20, oder bei 15 liegt, in erster Linie bei vorzugsweise acht, neun, zehn, elf, zwölf, dreizehn oder vierzehn, fünfzehn, sechzehn, siebzehn, achtzehn, neunzehn oder zwanzig liegt.

5. Radikalische Kunstharzmischung nach einem der Ansprüche 1 bis 4, **dadurch gekennzeichnet, dass** es als Reaktivharz ein Urethan(meth)acrylat oder ein propoxyliertes oder insbesondere ethoxyliertes aromatisches Diol-, wie Bisphenol-A-, Bisphenol-F- oder Novolak-(insbesondere di-)(meth)acrylat, beinhaltet.

6. Radikalische Kunstharzmischung nach einem der Ansprüche 1 bis 5, **dadurch gekennzeichnet, dass** die Reaktivverdünner aus den folgenden ausgewählt sind:
Reaktivverdünner mit einer Molekülmasse von 1000 g/mol oder weniger, insbesondere ausgewählt aus: Benzyl(meth)acrylat, Hydroxybutyl(meth)acrylat, Hydroxypropyl(meth)-acrylat, Hydroxy-ethyl(meth)acrylat, Alkyl(meth)acrylaten mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi(meth)acrylat, Butandioldi(meth)acrylat, wie 1,3- oder insbesondere 1,4-Butandioldi(meth)acrylat, Hexandioldi(meth)acrylat oder 1,10-Decandiol-di(meth)acrylat, Diethylglykol-di(meth)acrylat, Glycerinformalmethacrylat, radikalisch härtbare Oligoalkylenglykoldi(meth)acrylate, Trimethylolpropantri(meth)acrylat, Glycerindi(meth)acrylat, Glycerintri(meth)acrylat, Polyglycerinpoly(meth)acrylat, Ethylenglykoldimethacrylat, Polyethylenglykoldi(meth)acrylat, Cycloalkyl-, Bicycloalkyl- oder Heterocyclyl(meth)acrylate, worin Cycloalkyl oder Bicycloalkyl ferner substituiert sein kann und 5 bis 7 Ringkohlenstoffatome aufweist und Heterocyclyl 5 oder 6 Ringatome hat, ferner Substituenten tragen kann und 1 oder 2 Ringheteroatome ausgewählt aus N, O und S aufweist, wie Tetrahydrofurfuryl(meth)acrylat oder Isobornyl(meth)acrylat, Acetacetoxyalkyl-(meth)acrylat; Styrolen, wie Styrol, α-Methylstyrol, Vinyltoluol, tert.-Butylstyrol und/oder Divinylbenzol; und Gemischen von zwei oder mehr davon;
wobei es bei den erwähnten radikalisch härtbaren Oligoalkylenglykoldi(meth)acrylaten insbesondere um solche der Formel I, 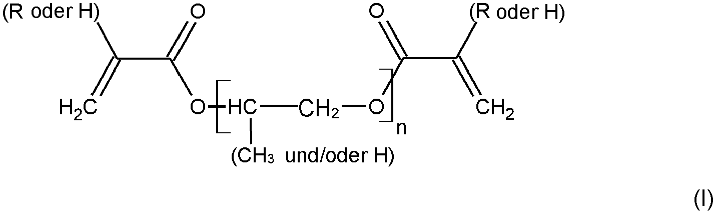
worin die Reste R unabhängig voneinander für C₁-C₇-Alkyl stehen, insbesondere für Methyl, und worin n für durchschnittlich 2,5 bis 13, vorzugsweise für 3,5 bis 10, insbesondere für 4 bis 8 und vor allem für 4,2 bis 7, insbesondere für 4,5 und 6 steht.

7. Radikalische Kunstharzmischung nach einem der Ansprüche 1 bis 6, **dadurch gekennzeichnet, dass** jeder der Reaktivverdünner, unabhängig von der Konzentration der anderen beinhalteten Reaktivverdünner, 0,001 bis 8 Gew.-%, bevorzugt von 0,001 bis 3 Gew.-%, in besonders bevorzugten Varianten der Erfindungsgegenstände von 0,001 bis <1 Gew.-%, vor allem von 0,01 bis <1 Gew.-%, bezogen auf das Gesamtgewicht des Kunstharzes ohne Härterkomponente beinhaltet ist; wobei die Gesamtmenge an Reaktivverdünnern vorzugsweise im Bereich von 0,002 bis 30, stärker vorzugsweise von 0,05 bis 20, insbesondere von 0,1 bis 10 Gew.-% liegt.

8. Radikalische Kunstharzmischung nach einem der Ansprüche 1 bis 7, **dadurch gekennzeichnet, dass** jeder der Reaktivverdünner, unabhängig von der Konzentration der anderen beinhalteten Reaktivverdünner, in einer Konzentration von 0,001 bis weniger als 1 Gew.-%, vorzugsweise von 0,1 bis weniger als 1 Gew.-%, vorliegt.

9. Radikalische Kunstharzmischung nach einem der Ansprüche 1 bis 8, **dadurch gekennzeichnet, dass** sie neben dem Reaktivharz und den Reaktivverdünnern weitere Inhaltsstoffe beinhaltet.

10. Zwei- oder mehrkomponentiges Kunstharzsystem , welches eine Komponente mit einem Härter und eine Komponente, die ein Reaktivharz und eine Mehrzahl von Reaktivverdünnern als Kunstharzmischung wie in einem der vorstehenden Ansprüche definiert beinhaltet, umfasst.

11. Zwei- oder mehrkomponentiges Kunstharzsystem nach Anspruch 10 zur Anwendung in der Befestigungstechnik, vor allem im Baubereich, insbesondere für die Befestigung von Verankerungselementen in Vertiefungen in Bausubstraten.

12. Verwendung einer Mehrzahl von Reaktivverdünnern zur Kontrolle der Identität von einer Kunstharzmischung wie in einem der Ansprüche 1 bis 9 definiert oder von einem Kunstharzsystem wie in einem der Ansprüche 10 oder 11 definiert, beinhaltend jeweils die qualitative oder vorzugsweise die qualitative und quantitative analytische Bestimmung von Art oder Art und Anteil von einem oder vorzugsweise mehreren oder insbesondere allen der Reaktivverdünner in der Kunstharzmischung oder in einer Reaktivharz beinhaltenden und/oder anderen Komponente in dem Kunstharzsystem.

13. Verwendung nach Anspruch 12, wobei die Kunstharzmischung oder das Kunstharzsystemals Zwei- oder Mehrkomponenten-Kunstharzsystem, jeweils insbesondere für die Befestigungstechnik vorliegt.

14. Verfahren zur Kontrolle der Identität von einer Kunstharzmischung oder einem Kunstharzsystem, welches die Verwendung nach einem der Ansprüche 12 oder 13 beinhaltet.

15. Verwendung eines Kunstharzsystems nach einem der Ansprüche 10 oder 11 zur Befestigung von Verankerungselementen in Vertiefungen, wie insbesondere Löchern oder Spalten, in Bausubstraten, oder als Verklebungsmittel für andere Zwecke, oder ein Verfahren zur Befestigung von Verankerungselementen in Vertiefungen, wie insbesondere Löchern oder Spalten, in Bausubstraten, oder ferner zur Verklebung für andere Zwecke, wobei jeweils vorzugsweise das Verankerungsmittel und ein Kunstharzsystem nach einem der Ansprüche 10 oder 11 in die Vertiefung eingebracht werden oder zu verklebende Teile mit dem Kunstharzsystem auf einer oder beiden der zu verklebenden Flächen in Kontakt gebracht und so miteinander verklebt werden.

16. Verfahren zur Herstellung einer Kunstharzmischung nach einem der Ansprüche 1 bis 9 oder eines Kunstharzsystems nach Anspruch 10 oder nach Anspruch 11, wobei eine Mehrzahl von Reaktivverdünnern den übrigen Bestandteilen der Kunstharzmischung oder mindestens einer Komponente des Zwei- oder Mehrkomponenten-Kunstharzsystems, außer der Härterkomponente, zugesetzt werden.

17. Ein Satz von Kunstharzmischungen wie in einem der Ansprüche 1 bis 9 oder von Kunstharzsystemen wie in einem der Ansprüche 10 oder 11 definiert, umfassend eine Mehrzahl von Kunstharzmischungen, die sich jeweils in Art und/oder Anteil einer Mehrzahl von in den Kunstharzmischungen oder den Kunstharzsystemen beinhalteten Reaktivverdünner unterscheiden.

18. Satz nach Anspruch 17, **dadurch gekennzeichnet, dass** die Kunstharzmischungen jeweils N (mit N>2) unterschiedliche Reaktivverdünner aufweisen, ausgewählt aus einer Grundgesamtheit von N+M (mit M>1) unterschiedlichen Reaktivverdünnern, wobei jeder der N+M Reaktivverdünner in mindestens einer der Kunstharzmischungen vorkommt.

## Claims

1. Radically curable synthetic resin mixture, **characterized in that** it contains a plurality of different radically curable reactive diluents in addition to a radically curable reactive resin, four or more being present as a plurality of reactive diluents.

2. Radically curable synthetic resin mixture according to claim 1 for use in fixing technology.

3. Radical synthetic resin mixture according to either claim 1 or claim 2,
**characterized in that** five reactive diluents or more are present as a plurality of reactive diluents.

4. Radical synthetic resin mixture according to any of claims 1 to 3,
**characterized in that** six or more, preferably eight or more, reactive diluents are present as a plurality of reactive diluents, the upper limit being 50, preferably 30, preferably 20, or 15, primarily preferably eight, nine, ten, eleven, twelve, thirteen or fourteen, fifteen, sixteen, seventeen, eighteen, nineteen or twenty.

5. Radical synthetic resin mixture according to any of claims 1 to 4,
**characterized in that** it contains a urethane (meth)acrylate or a propoxylated or in particular ethoxylated aromatic diol, such as bisphenol A, bisphenol F or novolac (in particular di-) (meth)acrylate as a reactive resin.

6. Radical synthetic resin mixture according to any of claims 1 to 5,
**characterized in that** the reactive diluents are selected from the following:
reactive diluents having a molecular mass of 1000 g/mol or less, in particular selected from: benzyl (meth)acrylate, hydroxybutyl (meth)acrylate, hydroxypropyl (meth)acrylate, hydroxy-ethyl (meth)acrylate, alkyl (meth)acrylates having 1 to 10 (meth)acrylate groups, such as mono-, di-, tri-, tetra-, penta-, hexa- or poly(meth)acrylates, for example alkyl di(meth)acrylate or tri(meth)acrylate, such as 1,2-ethanediol di(meth)acrylate, butanediol di(meth)acrylate, such as 1,3-butanediol di(meth)acrylate or in particular 1,4-butanediol di(meth)acrylate, hexanediol di(meth)acrylate or 1,10-decanediol di(meth)acrylate, diethyl glycol di(meth)acrylate, glycerin formal methacrylate, radically curable oligoalkylene glycol di(meth)acrylate, trimethylol propane tri(meth)acrylate, glycerin di(meth)acrylate, glycerin tri(meth)acrylate, polyglycerin poly(meth)acrylate, ethylene glycol dimethacrylate, polyethylene glycol di(meth)acrylate, cycloalkyl (meth)acrylate, bicycloalkyl (meth)acrylate or heterocyclyl (meth)acrylate, where cycloalkyl or bicycloalkyl can be further substituted and have 5 to 7 ring carbon atoms, and heterocyclyl has 5 or 6 ring atoms, can also bear substituents, and has 1 or 2 ring heteroatoms selected from N, O and S, such as tetrahydrofurfuryl (meth)acrylate or isobornyl (meth)acrylate, acetoacetoxyalkyl (meth)acrylate, styrenes, such as styrene, α-methyl styrene, vinyl toluene, tert-butyl styrene and/or divinyl benzene, and mixtures of two or more thereof;
the radically curable oligoalkylene glycol di(meth)acrylates mentioned being in particular those of formula I, 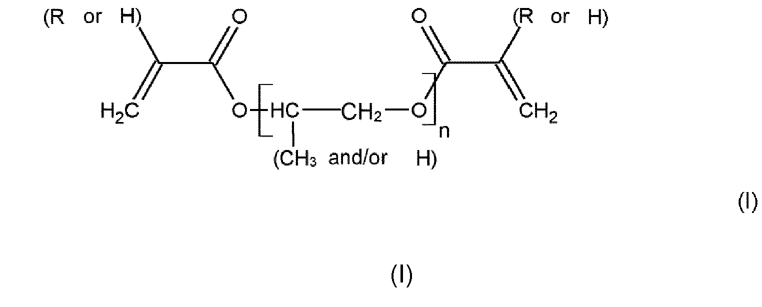
where the functional groups R represent, independently of one another, C₁-C₇ alkyl, in particular methyl, and where n represents, on average, 2.5 to 13, preferably 3.5 to 10, in particular 4 to 8, and especially 4.2 to 7, in particular 4.5 and 6.

7. Radical synthetic resin mixture according to any of claims 1 to 6,
**characterized in that** each of the reactive diluents, independently of the concentration of the other reactive diluents contained, is contained from 0.001 to 8 wt.%, preferably from 0.001 to 3 wt.%, in particularly preferred variants of the invention subject matter from 0.001 to <1 wt.%, especially from 0.01 to <1 wt.%, based on the total weight of the synthetic resin without a curing component, the total amount of reactive diluents preferably being in the range from 0.002 to 30, more preferably from 0.05 to 20, in particular from 0.1 to 10 wt.%.

8. Radical synthetic resin mixture according to any of claims 1 to 7,
**characterized in that** each of the reactive diluents, independently of the concentration of the other reactive diluents contained, is present in a concentration from 0.001 to less than 1 wt.%, preferably from 0.1 to less than 1 wt.%.

9. Radical synthetic resin mixture according to any of claims 1 to 8,
**characterized in that** it contains further ingredients in addition to the reactive resin and the reactive diluents.

10. Two-component or multi-component synthetic resin system comprising a component having a curing agent and a component containing a reactive resin and a plurality of reactive diluents as a synthetic resin mixture as defined in any of the preceding claims.

11. Two-component or multi-component synthetic resin system according to claim 10 for use in fixing technology, especially in the construction sector, in particular for fixing anchoring elements in recesses in building substrates.

12. Use of a plurality of reactive diluents for controlling the identity of a synthetic resin mixture as defined in any of claims 1 to 9 or of a synthetic resin system as defined in either claim 10 or claim 11, including the qualitative or preferably qualitative and quantitative analytical determination of type or type and proportion of one or preferably more or in particular all of the reactive diluents in the synthetic resin mixture or in a component containing reactive resin and/or other components in the synthetic resin system.

13. Use according to claim 12, wherein the synthetic resin mixture or the synthetic resin system is present as a two-component or multi-component synthetic resin system, in each case in particular for fixing technology.

14. Method for controlling the identity of a synthetic resin mixture or a synthetic resin system, which includes the use according to either claim 12 or claim 13.

15. Use of a synthetic resin system according to either claim 10 or claim 11 for fixing anchoring elements in recesses, such as in particular holes or gaps, in building substrates, or as a bonding agent for other purposes, or a method for fixing anchoring elements in recesses, such as in particular holes or gaps, in building substrates, or moreover for bonding for other purposes, wherein the anchoring element and a synthetic resin system according to either claim 10 or claim 11 are each preferably introduced into the recess or parts to be bonded are brought into contact with the synthetic resin system on one or both of the surfaces to be bonded and are thus bonded to one another.

16. Method for producing a synthetic resin mixture according to any of claims 1 to 9 or a synthetic resin system according to either claim 10 or claim 11, wherein a plurality of reactive diluents are added to the other constituents of the synthetic resin mixture or to at least one component of the two-component or multi-component synthetic resin system, except for the curing component.

17. Set of synthetic resin mixtures as defined in any of claims 1 to 9 or of synthetic resin systems as defined in either claim 10 or claim 11, comprising a plurality of synthetic resin mixtures, each of which differ in type and/or proportion of a plurality of reactive diluents contained in the synthetic resin mixtures or the synthetic resin systems.

18. Set according to claim 17, **characterized in that** the synthetic resin mixtures each have N (where N>2) different reactive diluents selected from a basic number of N+M (where M>1), each of the N+M reactive diluents being present in at least one of the synthetic resin mixtures.

## Revendications

1. Mélange de résine synthétique durcissable par voie radicalaire, **caractérisé en ce qu'**il contient, en plus d'une résine réactive durcissable par voie radicalaire, une pluralité de différents diluants réactifs durcissables par voie radicalaire, dans lequel quatre diluants réactifs ou plus sont prévus en tant que pluralité de diluants réactifs.

2. Mélange de résine synthétique durcissable par voie radicalaire selon la revendication 1, destiné à être utilisé dans la technique de fixation.

3. Mélange de résine synthétique radicalaire selon l'une des revendications 1 ou 2, **caractérisé en ce que** cinq diluants réactifs ou plus constituent la pluralité de diluants réactifs.

4. Mélange de résine synthétique radicalaire selon l'une des revendications 1 à 3, **caractérisé en ce que** six ou plus, de préférence huit ou plus, diluants réactifs constituent la pluralité de diluants réactifs, dans lequel la limite supérieure est de 50, préférablement de 30, de préférence de 20 ou de 15, en particulier est de préférence de huit, neuf, dix, onze, douze, treize ou quatorze, quinze, seize, dix-sept, dix-huit, dix-neuf ou vingt.

5. Mélange de résine synthétique radicalaire selon l'une des revendications 1 à 4, **caractérisé en ce qu'**il contient, en tant que résine réactive, un (méth)acrylate d'uréthane ou un (méth)acrylate de diol aromatique propoxylé ou en particulier éthoxylé, tel que le (méth)acrylate de bisphénol A, le (méth)acrylate de bisphénol F ou le (méth)acrylate de novolaque (en particulier le di(méth)acrylate de novolaque).

6. Mélange de résine synthétique radicalaire selon l'une des revendications 1 à 5, **caractérisé en ce que** les diluants réactifs sont choisis parmi les éléments suivants : des diluants réactifs comportant une masse moléculaire de 1 000 g/mol ou moins, en particulier choisis parmi : (méth)acrylate de benzyle, (méth)acrylate d'hydroxybutyle, (méth)acrylate d'hydroxypropyle, (méth)acrylate d'hydroxyéthyle, des (méth)acrylates d'alkyle comportant 1 à 10 groupes (méth)acrylate, tels que des mono(méth)acrylates, di(méth)acrylates, tri(méth)acrylates, tétra(méth)acrylates, penta(méth)acrylates, hexa(méth)acrylates ou poly(méth)acrylates, par ex. des di(méth)acrylates d'alkyle ou tri(méth)acrylates d'alkyle tels que di(méth)acrylate de 1,2-éthanediol, di(méth)acrylate de butanediol, tels que di(méth)acrylate de 1,3-butanediol ou en particulier di(méth)acrylate de 1,4-butanediol, di(méth)acrylate d'hexanediol ou di(méth)acrylate de 1,10-décanediol, di(méth)acrylate de diéthylène glycol, méthacrylate de glycérol formal, des di(méth)acrylates d'oligoalkylène glycol durcissables par voie radicalaire, tri(méth)acrylate de triméthylolpropane, di(méth)acrylate de glycérol, tri(méth)acrylate de glycérol, poly(méth)acrylate de polyglycérol, diméthacrylate d'éthylène glycol, di(méth)acrylate de polyéthylène glycol, des (méth)acrylates de cycloalkyle, de bicycloalkyle ou d'hétérocyclyle, où le cycloalkyle ou le bicycloalkyle peut en outre être substitué et présente 5 à 7 atomes de carbone de cycle et l'hétérocyclyle a 5 ou 6 atomes de cycle, peut en outre porter des substituants et présente 1 ou 2 hétéroatomes de cycle choisis parmi N, O et S, tels que (méth)acrylate de tétrahydrofurfuryle ou (méth)acrylate d'isobornyle, (méth)acrylate d'acétoacétoxy alkyle ; des styrènes, tels que styrène, α-méthylstyrène, vinyltoluène, tert.-butylstyrène et/ou divinylbenzène ; et des mélanges de deux ou plus de ceux-ci ;
dans lequel les di(méth)acrylates d'oligoalkylène glycol durcissables par voie radicalaire mentionnés sont en particulier ceux de formule I, 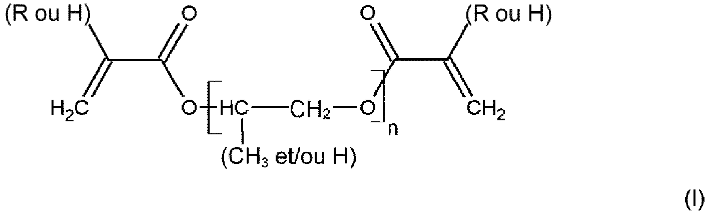 où les radicaux R représentent indépendamment les uns des autres un alkyle en C₁-C₇, en particulier le méthyl, et où n représente en moyenne 2,5 à 13, de préférence 3,5 à 10, en particulier 4 à 8 et tout particulièrement 4,2 à 7, en particulier 4,5 et 6.

7. Mélange de résine synthétique radicalaire selon l'une des revendications 1 à 6, **caractérisé en ce que** chacun des diluants réactifs, indépendamment de la concentration des autres diluants réactifs contenus, est contenu de 0,001 à 8 % en poids, de préférence de 0,001 à 3 % en poids, de 0,001 à < 1 % en poids dans des variantes particulièrement préférées des objets de l'invention, tout particulièrement de 0,01 à < 1 % en poids, par rapport au poids total de la résine synthétique sans composants durcisseurs ; dans lequel la quantité totale de diluants réactifs se situe de préférence dans la plage de 0,002 à 30, de manière davantage préférée de 0,05 à 20, en particulier de 0,1 à 10 % en poids.

8. Mélange de résine synthétique radicalaire selon l'une des revendications 1 à 7, **caractérisé en ce que** chacun des diluants réactifs, indépendamment de la concentration des autres diluants réactifs contenus, est présent en une concentration de 0,001 à moins de 1 % en poids, de préférence de 0,1 à moins de 1 % en poids.

9. Mélange de résine synthétique radicalaire selon l'une des revendications 1 à 8, **caractérisé en ce qu'**il contient, en plus de la résine réactive et des diluants réactifs, des ingrédients supplémentaires.

10. Système de résine synthétique à deux composants ou plus, lequel comprend un composant comportant un durcisseur et un composant qui contient une résine réactive et une pluralité de diluants réactifs en tant que mélange de résine synthétique tel que défini dans l'une des revendications précédentes.

11. Système de résine synthétique à deux composants ou plus selon la revendication 10, destiné à être utilisé dans la technique de fixation, tout particulièrement dans le domaine de la construction, en particulier pour la fixation d'éléments d'ancrage dans des cavités dans des substrats de construction.

12. Utilisation d'une pluralité de diluants réactifs pour le contrôle de l'identité d'un mélange de résine synthétique tel que défini dans l'une des revendications 1 à 9 ou d'un système de résine synthétique tel que défini dans l'une des revendications 10 ou 11, contenant respectivement la détermination analytique qualitative ou de préférence qualitative et quantitative du type ou du type et de la proportion d'un ou de préférence de plusieurs ou en particulier de tous les diluants réactifs dans le mélange de résine synthétique ou dans le système de résine synthétique contenant une résine réactive et/ou d'autres composants.

13. Utilisation selon la revendication 12, dans laquelle le mélange de résine synthétique ou le système de résine synthétique est présent comme système de résine synthétique à deux composants ou plus, respectivement en particulier pour la technique de fixation.

14. Procédé permettant le contrôle de l'identité d'un mélange de résine synthétique ou d'un système de résine synthétique, lequel procédé contient l'utilisation selon l'une des revendications 12 ou 13.

15. Utilisation d'un système de résine synthétique selon l'une des revendications 10 ou 11 pour la fixation d'éléments d'ancrage dans des cavités, telles qu'en particulier des trous ou des fentes, dans des substrats de construction, ou comme adhésif à d'autres fins, ou procédé permettant la fixation d'éléments d'ancrage dans des cavités, telles qu'en particulier des trous ou des fentes, dans des substrats de construction, ou par ailleurs permettant le collage à d'autres fins, dans lequel le moyen d'ancrage et un système de résine synthétique selon l'une des revendications 10 ou 11 sont respectivement de préférence incorporés dans la cavité ou sont mis en contact, sur une surface ou sur les deux surfaces à coller, avec des pièces à coller comportant le système de résine synthétique et sont ainsi collés l'un à l'autre.

16. Procédé de préparation d'un mélange de résine synthétique selon l'une des revendications 1 à 9 ou d'un système de résine synthétique selon la revendication 10 ou selon la revendication 11, dans lequel une pluralité de diluants réactifs sont ajoutés aux autres constituants du mélange de résine synthétique ou au moins à un composant du système de résine synthétique à deux composants ou plus, à l'exception du composant durcisseur.

17. Ensemble de mélanges de résine synthétique tels que définis dans l'une des revendications 1 à 9 ou de systèmes de résine synthétique tels que définis dans l'une des revendications 10 ou 11, comprenant une pluralité de mélanges de résine synthétique qui se distinguent respectivement par le type et/ou la proportion d'une pluralité de diluants réactifs contenus dans les mélanges de résine synthétique ou les systèmes de résine synthétique.

18. Ensemble selon la revendication 17, **caractérisé en ce que** les mélanges de résine synthétique présentent respectivement N (avec N > 2) différents diluants réactifs, choisis dans une population de N + M (avec M > 1) différents diluants réactifs, dans lequel chacun des N + M diluants réactifs est présent dans au moins l'un des mélanges de résine synthétique.
